# EUROPEAN PATENT SPECIFICATION

(11) **EP 1 449 401 B1**
(45) Date of publication and mention of the grant of the patent: **12.12.2007**
(21) Application number: 02784587.4
(22) Date of filing: 26.11.2002
(51) Int. Cl.: H04Q 7/38

(54) **METHOD AND SYSTEM FOR PROVIDING LOCATION-BASED EVENT SERVICE**
VERFAHREN UND SYSTEM ZUM BEREITSTELLEN EINES STANDORTABHÄNGIGEN EREIGNISDIENSTES
PROCEDE ET SYSTEME DE PRESTATION DE SERVICE D'EVENEMENTS SUR LA BASE DE LA POSITION TOPOGRAPHIQUE

(30) Priority: 27.11.2001 US 993670
(43) Date of publication of application: 25.08.2004
(73) Proprietor: Oracle International Corporation, Redwood Shores, CA 94065 (US)
(72) Inventor: HAN, Song, Nashua, NH 03062 (US); BISWAS, Prabuddha, Nashua, NH 03062 (US); WU, Jing, Nashua, NH 03062 (US)
(74) Representative: Skone James, Robert Edmund
(86) International application number: PCT/US2002/037812
(87) International publication number: WO 2003/047303

(56) References cited:
- EP-A- 1 102 501
- WO-A-00/22860
- WO-A-00/62574
- US-A- 6 091 959
- US-B1- 6 263 209

## Description

### Field of the Invention

The present invention relates to a method, system, and computer program product for providing event service based on locations of mobile users

### Background of the Invention

Mobile communications and computing devices have recently come into widespread use. These devices provide communications, computing, and connection capabilities in small, easily transported packages. Examples of such devices include mobile phones and personal digital assistants (PDAs). A capability that is becoming available for these devices is a position sensing capability, which allows the device and/or a communications network to which the device is connected, to determine the position of the device. The position sensing capability allows support of the capability for location-based events. A location-based event is triggered when a location-related characteristic of a mobile user, or a group mobile of users, as determined by the locations of the users' mobile devices, satisfies a pre-defined rule. Examples of location-related characteristics include a location, a velocity, or other location-related activity. For example, a user might define a rule that when person A enters a particular region and person B is located within 2 miles of a particular address, a message will be transmitted to a third person C.

A system that supports location-based events needs to update the locations of the mobile users of the system. Typically, the locations of the mobile users are updated based on a fixed, periodic schedule. Periodic updating is used because, due to the cost and complexity of mobile device location determination, it is very expensive and difficult to track the locations of mobile users in real-time. A typical mobile network may include thousands or millions of mobile users. A problem arises in that the network traffic overhead associated with updating locations of mobile users based on a fixed periodic schedule is very high. A need arises for a technique that provides updating of locations of mobile users, but reduces the network traffic overhead as compared with conventional techniques.

US-A-6263209 discloses a wireless communication system in which the position of a user's portable subscriber unit is determined and compared with recorded information, such as the location of a meeting the user is scheduled to attend. If appropriate, the system alerts the user and/or other parties to the situation. The user's location is updated at predetermined times without regard for the high network traffic overhead that results.

WO-A-00/22860 discloses a system for use with wireless communications networks which notifies a first user of a second user's approach within a certain proximity. The position of each user's communication device is known to the wireless network, but there is no disclosure of how this is achieved, and the aforementioned problem of high network traffic is not addressed.

### Summary of the Invention

The present invention is a method, system, and computer program product for providing event service based on locations of mobile users. The present invention provides improved efficiency by using a "location cache" to store recent location information for mobile users, reducing the need for expensive and time consuming positioning requests, and by intelligently scheduling times when location determinations are to be made. The present invention maintains information about the event conditions and event related users' past locations, velocities, and other information. A record for an event is created when a location-based event is registered and expires after the event is triggered. For each user associated with an event, the system keeps the predicted event time when the user's location meets the event condition. The predicted event time determines when the next positioning will be performed. At the predicted time, a positioning request is sent to obtain an actual location of the mobile user. Depending an the positioning result, the event management module either triggers the event or updates the predicted time and the user's past locations. The predicted time is computed as a function of the users' past locations and velocities information, destination location information, and the characteristic of the event.

A method for providing location-based event service, according to the present invention, comprises the steps of: a) obtaining information indicating a current location of at least one mobile user, the at least one mobile user comprising a selected mobile user, b) determining if at least one condition relating to the locations of a plurality of mobile users, including the selected mobile user, is satisfied based on the indicated current location of the selected mobile user, c) performing at least one event, if the at least one condition is satisfied, and d) determining a time interval to wait before repeating steps a) - c), characterised in that the step of determining a time interval to wait comprises the steps of: selecting as the selected mobile user, a mobile user from the plurality of mobile users that is least likely to cause the at least one condition to be satisfied, and determining the time interval to wait based on the selected mobile user.

The step of determining a time interval to wait based on the selected mobile user may comprise the steps of estimating a time at which the selected mobile user is likely to satisfy a condition based on at least one of: a distance from a current location of the selected mobile user to a region relevant to the condition, a velocity of the selected mobile user, and determining the time interval to wait based on the estimated time at which the selected mobile user is likely to satisfy a condition and a time tolerance. The obtaining step may comprise the steps of searching a cache operable to store information indicating locations of mobile users for information indicating a location of the at least one mobile user, using the information indicating the location of the at least one mobile user as the information indicating the current location of the at least one mobile user, if the information indicating the location of the at least one mobile user is found in the cache, and querying at least one mobile positioning server to obtain the information indicating the current location of the at least one mobile user, if the information indicating the location of the at least one mobile user is not found in the cache.

The at least one event may comprise transmitting a message. The message may be transmitted to a mobile user or to a non-mobile user. The at least one condition may additionally relate to a time.

### Brief Description of the Drawings

The details of the present invention, both as to its structure and operation, can best be understood by referring to the accompanying drawings, in which like reference numbers and designations refer to like elements.
Fig. 1 is an exemplary block diagram of a network system 100 in which the present invention may be implemented.
Fig. 2 is an exemplary block diagram of a location management system shown in Fig. 1.
Fig. 3 is an exemplary block diagram of the interaction of processing modules included in location management system, which are shown in Fig. 2.
Fig. 4 is an exemplary flow diagram of a process of operation of a location acquisition module shown in Fig. 3.
Fig. 5 is an exemplary data flow diagram of operation of the location acquisition module shown in Fig. 3.
Fig. 6 is an exemplary flow diagram of a sub-process of a step of the process shown in Fig. 4.
Fig. 7 is an example of an application of a time interval determination, according to the present invention.

### Detailed Description of the Invention

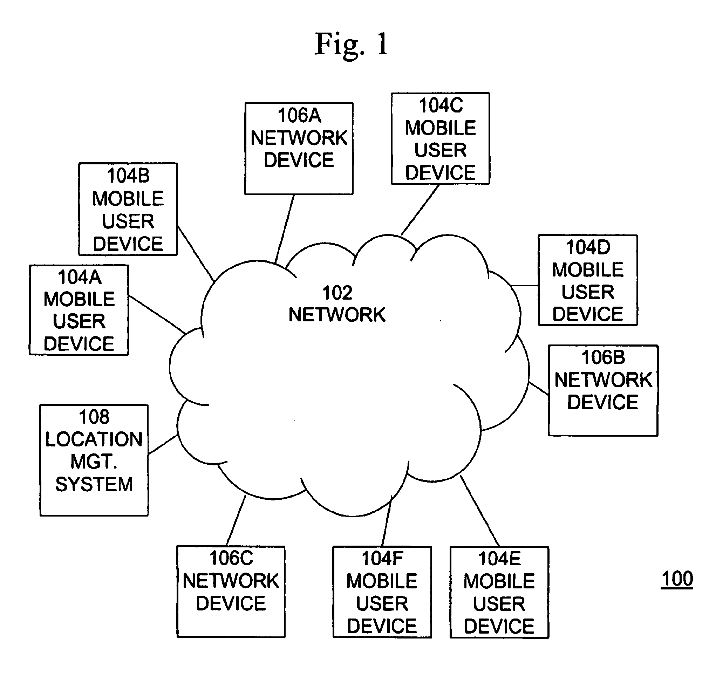

An exemplary block diagram of a network system 100 in which the present invention may be implemented is shown in Fig. 1. Network system 100 includes network 102. Network 102 provides communicative interconnection of a plurality of devices, such as mobile user devices 104A - 104F and network devices 106A - 106C. Network 102 may include both wireless and wireline networks interconnected as appropriate. The transmission medium in a wireless network is typically electromagnetic radiation, such as radio waves or light. The transmission medium in a wireline network is typically copper cable or fiber optic cable.

Network 102 may include one or more local area networks (LANs), one or more wide area networks (WANs), or both LANs and WANs. One or more networks may be included in network 102 and may include both public networks, such as the Internet, and private networks and may utilize any networking technology and protocol, such as Ethernet, Token Ring, Transmission Control Protocol/Internet Protocol (TCP/IP), etc. Although not shown in Fig. 1, network 102 may connect, interconnect, or interface with one or more other wireless networks or with one or more wireline networks.

Mobile user devices 104A - 104F may include any type of mobile electronic data processing system or communication device that is operated or possessed by a mobile user of the wireless network. Examples of such electronic data processing systems include personal computer systems, such as desktop or laptop computers, personal digital assistants (PDAs), wireless communications devices, such as cellular telephones, etc. In an embodiment in which the mobile user devices are computer systems, the computer systems may connect directly to network 102, or the computer systems may connect indirectly to network 102 through one or more other networks, gateways, firewalls, etc. In an embodiment in which the mobile user devices are other types of devices, such as PDAs or wireless communications devices, the connection to network 102 may be direct or indirect, wired, wireless, or a combination of wired and wireless, as is appropriate. Typically, the user interface of mobile user devices 104A - 104F is a graphical user interface, but other interfaces may be used as well. For example, the client systems may include cellular telephones communicatively connected to a touch-tone response unit or a voice response unit, which accepts touch-tone or voice commands and transmits them over network 102 and which receives responses over network 102, converts the received responses to audio, and transmits the received responses to the client systems.

Network devices 106A - 106C may include any type of electronic data processing system or communication device that is operated or possessed by a non-mobile user of the wireless network. Examples of such electronic data processing systems include servers, routers, switches, bridges, voice or tone response units, etc. Network devices 106A - 106C may connect directly to network 102, or the they may connect indirectly to network 102 through one or more other networks, gateways, firewalls, etc.

Location management system 108 is also communicatively connected to network 102. Location management system 108 interfaces with network 102 and with mobile user devices 104A - 104F and network devices 106A - 106C that are connected to network 102 and provides services based on locations of mobile users, as determined by mobile user devices operated or possessed by those mobile users.

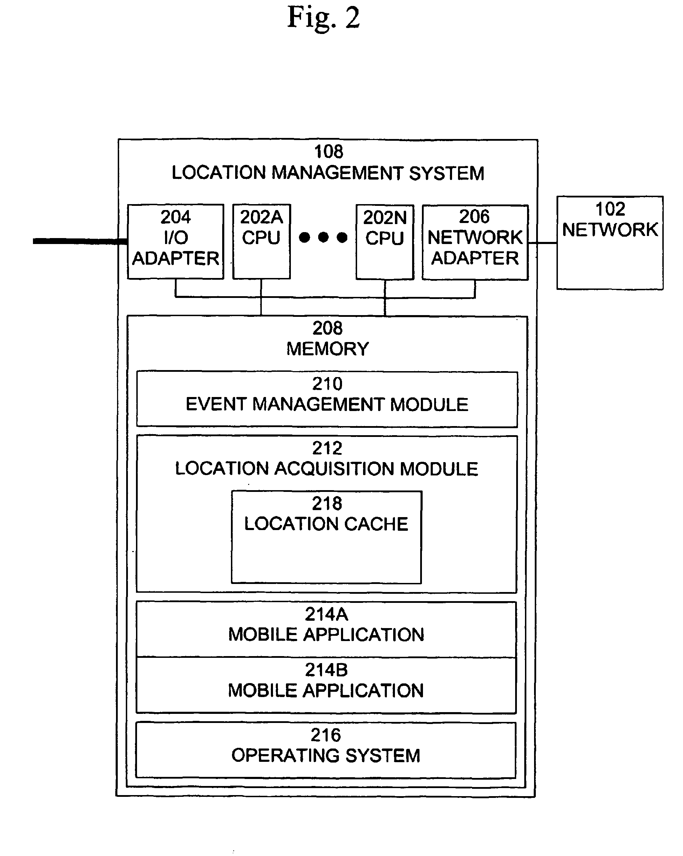

An exemplary block diagram of a location management system 108, shown in Fig. 1, is shown in Fig. 2. Location management system 108 is typically a programmed general-purpose computer system, such as a personal computer, workstation, server system, and minicomputer or mainframe computer. Location management system 108 includes one or more processors (CPUs) 202A-202N, input/output circuitry 204, network adapter 206, and memory 208. CPUs 202A-202N execute program instructions in order to carry out the functions of the present invention. Typically, CPUs 202A-202N are one or more microprocessors, such as an INTEL PENTIUM® processor. Fig. 2 illustrates an embodiment in which system 108 is implemented as a single multi-processor computer system, in which multiple processors 202A-202N share system resources, such as memory 208, input/output circuitry 204, and network adapter 206. However, the present invention also contemplates embodiments in which system 108 is implemented as a plurality of networked computer systems, which may be single-processor computer systems, multi-processor computer systems, or a mix thereof.

Input/output circuitry 204 provides the capability to input data to, or output data from, location management system 108. For example, input/output circuitry may include input devices, such as keyboards, mice, touchpads, trackballs, scanners, etc., output devices, such as video adapters, monitors, printers, etc., and input/output devices, such as, modems, etc. Network adapter 206 interfaces location management system 108 with network 102.

Memory 208 stores program instructions that are executed by, and data that are used and processed by, CPU 202 to perform the functions of location management system 108. Memory 208 may include electronic memory devices, such as random-access memory (RAM), read-only memory (ROM), programmable read-only memory (PROM), electrically erasable programmable read-only memory (EEPROM), flash memory, etc., and electro-mechanical memory, such as magnetic disk drives, tape drives, optical disk drives, etc., which may use an integrated drive electronics (IDE) interface, or a variation or enhancement thereof, such as enhanced IDE (EIDE) or ultra direct memory access (UDMA), or a small computer system interface (SCSI) based interface, or a variation or enhancement thereof, such as fast-SCSI, wide-SCSI, fast and wide-SCSI, etc, or a fiber channel-arbitrated loop (FC-AL) interface.

Memory 208 includes event management module 210, location acquisition module 212, mobile applications 214A and 214B, and operating system 216. Event management module 210 manages locations of mobile users and event conditions that are defined based on the locations of the mobile users in order to carry out the location-based event processing of the present invention. Location acquisition module 212 communicates with systems that determine the locations of mobile devices operated or possessed by mobile users to obtain information indicating the locations of the mobile users. Mobile applications 214A and 214B perform other location based processing. Operating system 216 provides overall system functionality. Location acquisition module 212 includes location cache 218, which provides caching of location information for improved performance of the system.

As shown in Fig. 2, the present invention contemplates implementation on a system or systems that provide multi-processor, multi-tasking, multi-process, and/or multi-thread computing, as well as implementation on systems that provide only single processor, single thread computing. Multi-processor computing involves performing computing using more than one processor. Multi-tasking computing involves performing computing using more than one operating system task. A task is an operating system concept that refers to the combination of a program being executed and bookkeeping information used by the operating system. Whenever a program is executed, the operating system creates a new task for it. The task is like an envelope for the program in that it identifies the program with a task number and attaches other bookkeeping information to it. Many operating systems, including UNIX^{®}, OS/2^{®}, and WINDOWS^{®}, are capable of running many tasks at the same time and are called multitasking operating systems. Multi-tasking is the ability of an operating system to execute more than one executable at the same time. Each executable is running in its own address space, meaning that the executables have no way to share any of their memory. This has advantages, because it is impossible for any program to damage the execution of any of the other programs running on the system. However, the programs have no way to exchange any information except through the operating system (or by reading files stored on the file system). Multi-process computing is similar to multi-tasking computing, as the terms task and process are often used interchangeably, although some operating systems make a distinction between the two.

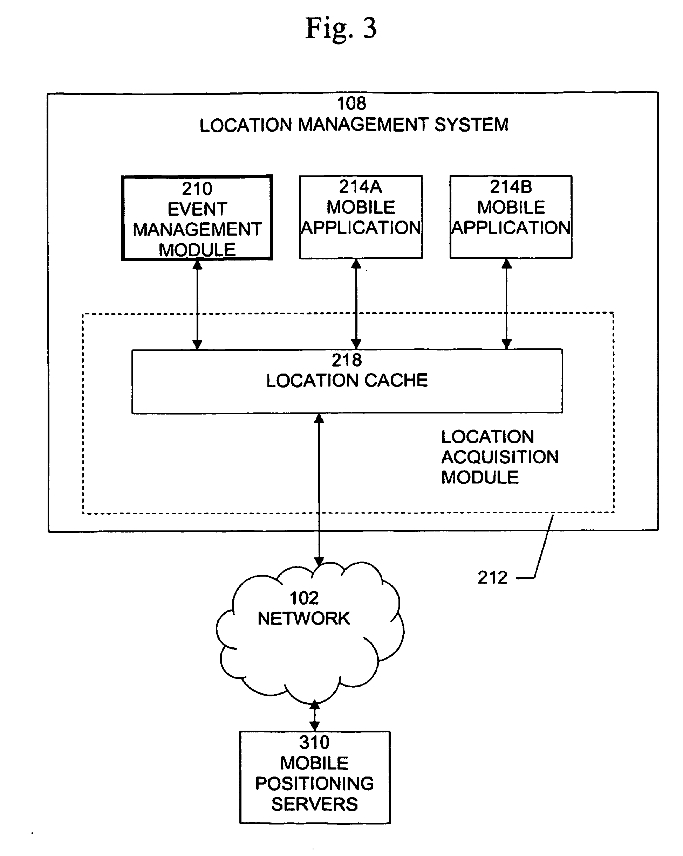

An exemplary block diagram of the interaction of processing modules included in location management system 108, which are shown in Fig. 2, is shown in Fig. 3. Location management system 108 acquires location information related to mobile users, stores and manages that information, and determines whether location-based conditions that have been defined have been satisfied using the location information. Location management system 108 includes location acquisition module 212, event management module 210, and may include other mobile applications, such as mobile applications 214A and 214B. Location acquisition module 212 includes location cache 218 and communicates with mobile positioning servers 310 over network 102. Event management module 210 requests location information about mobile users whose locations are being tracked from location acquisition module 212. When a position request comes into location acquisition module 212, location cache 218 is searched first for information with which to fill the request. The cached information may include information such as an ID of a mobile device operated by or in the possession of the mobile user, information relating to past locations of the mobile user, such as the past n positions of the mobile device, and other location related information.

When an item is found in the cache in response to a request, it is determined whether the item is too stale to use. Each cache item will expire after certain amount of time, which is a heuristic function of the velocity of a user, past positions of the user, and application specified quality of location parameters. If information with which to fill the request is found in location cache 218, the cached information will be returned and real position sensing will not be performed. If information with which to fill the request is not found in location cache 218, real position sensing will be performed and location cache 218 will be updated with the obtained information.

Mobile positioning servers 310 communicate with mobile devices, typically over a wireless network, and obtain information indicating positions of the mobile devices. If information with which to fill the request is not found in location cache 218, location acquisition module 212 requests location information about mobile users whose locations are being tracked from mobile positioning servers 310.

Once information needed to fill the request is obtained, location cache 212 transmits the information to event management module 210, and may also transmit the information to other mobile applications, such as mobile applications 214A and 214B. Event management module 210 uses the received information to determine whether a location-based condition defined for a particular mobile user has been satisfied. If so, event management module 210 triggers the performance of an event.

The event management module 210 is organized on top of the location acquisition module 212. It maintains the information about the event condition and event related users' past positions, velocities, and other information. A record for an event is created when a location-based event is registered and expires after the event is triggered. For each user associated with an event, the system keeps the predicted event time when the user's location meets the event condition. The predicted event time determines when the next positioning will be performed with an initial value that is guaranteed to be before the real event time. At the predicted time, a positioning request is sent to the positioning module of the system. Depending on the positioning result, the event management module 210 either triggers the event or updates the predicted time and the user's past positions. The predicted time is computed as a function of the users' past positions and velocities information, destination location information, the intervals between previous predicted event times and the characteristic of the event.

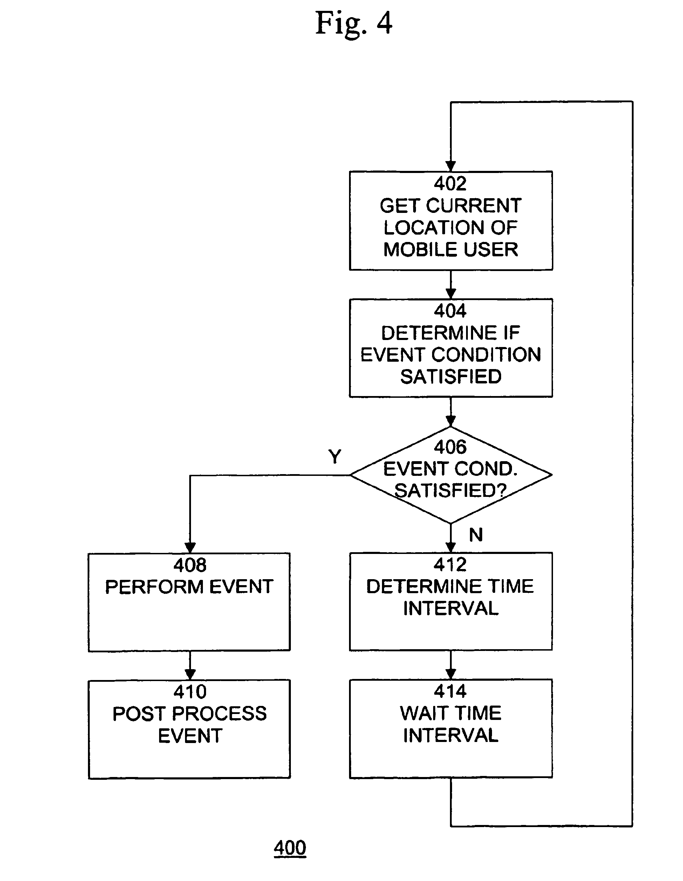

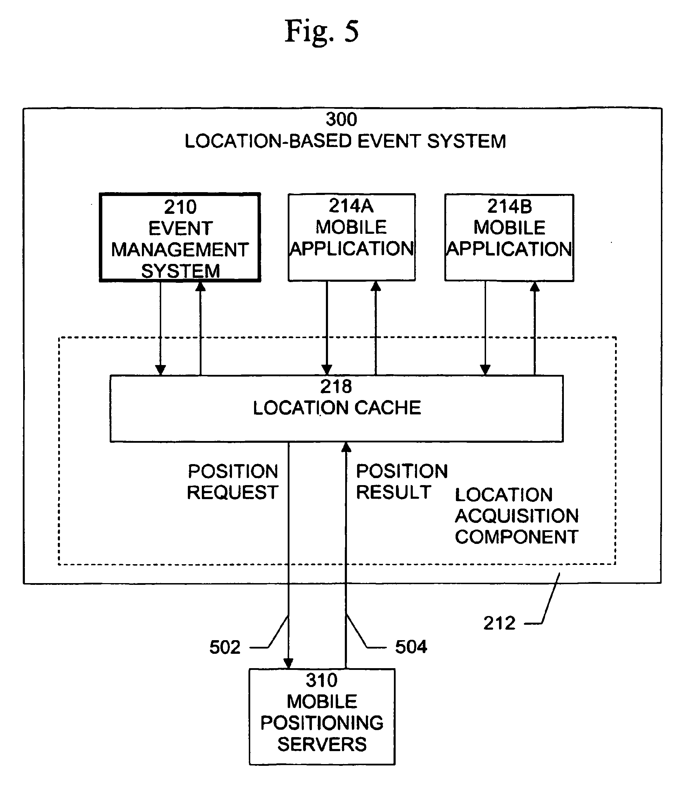

An exemplary flow diagram of a process 400 of operation of location acquisition module 212, shown in Fig. 3, is shown in Fig. 4. It is best viewed in conjunction with Fig. 5, which is an exemplary data flow diagram of operation of location acquisition module 300. Process 400 begins with step 402, in which a current location of a mobile user is obtained. Event management module 210 requests location information about mobile users whose locations are being tracked from location acquisition module 212. When a position request comes into location acquisition module 212, location cache 218 is searched first for information with which to fill the request. The cached information may include information such as an ID of a mobile device operated by or in the possession of the mobile user, information relating to past locations of the mobile user, such as the past n positions of the mobile device, and other location related information.

Each cache item will expire after certain amount of time, which is a heuristic function of the velocity of a user and past positions of the user. If information with which to fill the request is found in location cache 218, real position sensing will not be performed. Instead, the cached information, such as a previous position of the mobile user, or information based on cached information, such as an extrapolated position computed as a function of previous positions and velocities, will be returned. If information with which to fill the request is not found in location cache 218, location cache transmits a position request to mobile positioning servers 310. Position request 502 includes information identifying one or more mobile users and/or mobile devices operated or possessed by mobile users. If position request 502 includes information identifying a mobile user, that information is translated into information identifying a mobile device. Mobile positioning servers 310 communicates with the identified mobile device, typically over a wireless network, and obtains information indicating a position of the mobile device. Mobile positioning servers 310 transmit position result 504, which includes information indicating a position of the mobile device, to location cache 218. Position result 504 typically includes position information in the form of latitude and longitude of the mobile device.

Location cache 212 caches location information included in position result 504 and transmits the location information to event management module 210

In step 404, event management module 210 uses the location information to determine whether any event conditions that have been defined for the mobile user for which location information has been obtained have been satisfied. Event management module 210 maintains information about the event condition and the information related to mobile users associated with the event, such as past locations of the mobile users, velocities of the mobile users, and other information. A record or entry for an event is created in an event database when a location-based event is registered. The record expires after the event condition is satisfied and the event is triggered. The information in position result 504 is compared to location-based event conditions that have been defined. For example, a condition might be defined as: within two miles of a particular address. To perform the comparison, the latitude and longitude of the address is obtained from a commonly available geocoding service or database, and the distance between the latitude and longitude of the address and the latitude and longitude included in position result 504 is easily computed. If the distance is less than two miles, the condition is satisfied. Conditions of any required complexity may be defined and evaluated by the present invention. For example, in addition to conditions that are based only on location, conditions that are based on time or on the combination of time and location may also be defined. An example of such a condition might be defined as: within two miles of a particular address after 2:00 P.M. today.

In step 406, if it is determined that an event condition was satisfied, then process 400 continues with step 408, in which defined event processing is performed. The event processing may be as complex as is required, but typically involves transmission of one or more messages to one or more parties. For example, if it is determined that a mobile user is within two miles of a particular address, a message may be transmitted to that address including information to that effect. This, for example, might be used to indicate that a party has almost arrived at a destination and that those at that destination can expect the party to arrive shortly. Likewise, a message may be transmitted to one or more other parties, informing those parties of the satisfaction of the condition.

In step 410, post-processing of the event occurs.

If, in step 406, it is determined that no event condition was satisfied, then process 400 continues with step 412, in which a predicted time for the next location update is determined. Event management module 210 maintains information about the event condition and the information related to mobile users associated with the event, such as past locations of the mobile users, velocities of the mobile users, and other information. A record or entry for an event is created in an event database when a location-based event is registered. The record expires after the event condition is satisfied and the event is triggered. For each mobile user associated with an event, the event management module 210 determines and maintains a predicted event time, which is a time at which it is predicted that the location of a mobile user will satisfy an event condition. The predicted event time is used to determine when the next request for the location of the mobile user will be transmitted. The predicted time is adjusted to ensure that the location request will occur before the event condition is actually satisfied, so that event condition satisfaction is not missed or delayed.

For example, a location and velocity of a mobile user may be used to determine a predicted time as follows. The distance between the mobile user's location and the closest location included in an event condition with which the mobile user is associated is determined. This distance is then divided by the velocity of the mobile user to determine a minimum time that it will be before the mobile user's location could satisfy the event condition. The minimum time may be reduced to ensure that the location request will occur before the event condition is actually satisfied. The minimum time is then added to the current time to determine the predicted time.

In step 414, the process wait until the predicted time, then loops back to step 402, in which a location update is performed.

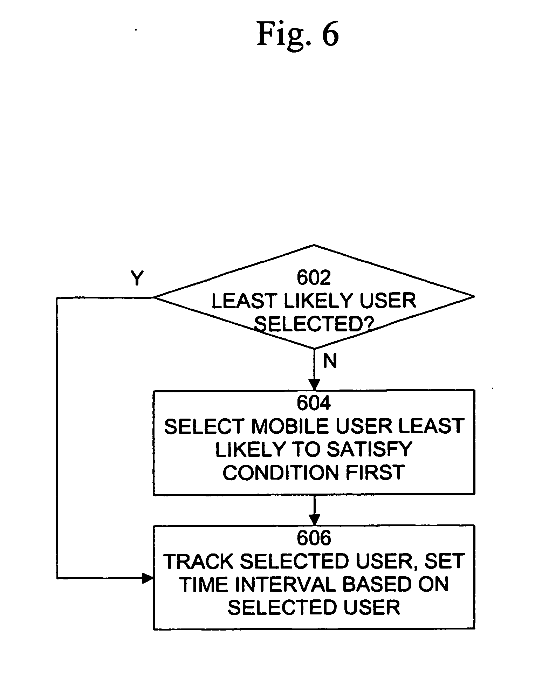

An exemplary flow diagram of a sub-process of step 412, in which the predicted time is determined, is shown in Fig. 6. The sub-process of step 412 begins with step 602, in which it is determined whether the correct mobile user is being tracked. The correct mobile user to track for a given event condition is the mobile user least likely to cause the event conditions associated with that mobile user to be satisfied. For example, this may be the mobile user farthest from a relevant region, the slowest moving mobile user, etc. If the mobile user least likely to satisfy the event condition first is not selected for tracking, then in step 604, the mobile user that is least likely to satisfy the event condition first is selected for tracking. The process then continues with step 606. If, in step 602, it is determined that the mobile user least likely to satisfy the event condition first is selected for tracking, then the process continues directly to step 606.

In step 606, the selected mobile user is tracked and the predicted time for location updates is set based on that selected user. The predicted time is determined using a heuristic function. For example, the heuristic function may be based on the distance from the selected mobile user's current position to the relevant region, the velocity of the selected mobile user, including the speed and the direction in which the selected mobile user is moving, the selected mobile user's past positions, and a time tolerance. In some instances, such as when a mobile user is close to the destination, the heuristic function may be a simple calculation, while in other cases, such as when the mobile user is far from the destination, the heuristic function must be enhanced to cover changes in the mobile user's travel may occur. For example, for a mobile user that is 1000 miles away from a destination and traveling at 50 miles per hour, a simple calculation would yield a predicted time of 20 hours. However, this should not be used as the predicted time since the mobile user's travel may change - the mobile user may take a flight and arrive at the destination much sooner. Thus, it is advantageous to use a lower bound for velocity when the mobile user is far from the destination, so the the predicted time will not be too late.

The time tolerance specifies the amount of inaccuracy in detection of satisfaction of a condition that can be tolerated. In other words, for a given time tolerance *t,* detection of satisfaction of an event condition must occur within time t after the event condition is satisfied. For example, if the time tolerance is set to 10 minutes, and the condition is a mobile user entering a region, then the system must detect that the mobile user has entered the region within 10 minutes after the mobile user actually enters the region. The time tolerance may be either a system-wide default or the time tolerance may be specified by the mobile user for a specific event.

When the selected mobile user is far from the region, or is moving slowly, or both, then the estimated time for the selected mobile user to enter the region is large and the computed time interval until the predicted time are correspondingly large. When the selected mobile user is close to the region, or is moving quickly, or both, then the estimated time for the selected mobile user to enter the region is small and the computed time interval until the predicted time are correspondingly small. However, when the computed time intervals become less than the time tolerance, the time intervals are set to the time tolerance, rather than to the smaller computed value. This improves system performance by reducing the number of position requests, yet it still ensures detection of the satisfaction of the condition within the time tolerance.

A simple case is where a single user enters or leaves a region. In reality, a location-based event may have a complicated condition. For example, one mobile user enters a region, one mobile user leaves a region, multiple mobile users are within a region, multiple mobile users are outside a region, a mobile user enters/leaves a region when other mobile users are within the region, etc. Different conditions can further be combined together by Boolean operations. However, at any given time, a complex condition can be evaluated by evaluating the location of a single mobile user.

Consider the following event condition as an example:
*When three mobile users A, B and C are all located within California, send a message to D.*
Assume the event is registered at 1pm. If at that time the condition is already satisfied, then the event is triggered and we are done. Otherwise, there must be at least one mobile user outside California. Let's assume A and B are already inside and C is outside. Then instead of keeping track of the positions of all three mobile users, it is only necessary to track C. In this case, C is determined to be the mobile user least likely to satisfy the condition first, and C is selected as the mobile user to track.

Suppose at 4pm, C enters California. Within the 3 hours, the location of C was determined 10 times, with the first 5 position requests having large time intervals between them because C was unlikely to arrive quickly. The last 5 positioning requests have a fixed interval equal to the time tolerance because C is approaching the destination. But within these 3 hours, the locations of A and B are never determined by the event system. When the selected mobile user, C, satisfies the condition by entering California, the system obtains the locations of all three mobile users to determine whether the complete condition is satisfied. If the condition is met (all three are in California) then the event is triggered. If the condition is not met, then A or B or both must be outside California. Again, the mobile user that is least likely to satisfy the condition first is selected for tracking. Even if the mobile user that is selected for tracking enters the region before other mobile users, the event is still detected correctly. The system may make more positioning requests than would have been necessary had the "correct" mobile user been selected for tracking, but the event is still detected correctly.

The process shown in Fig. 4 repeats until the event is triggered or is deleted from the system by the administrator or user. In the example above, the complete event condition can be stated as a conjunction of three condition elements: A is in California, B is in California and C is in California. For this type of condition, in which the condition elements are ANDed together, only one mobile user must be tracked and the condition is the mobile user either entering or leaving a region. If condition elements within a complicated condition are ORed together, then the condition elements can be treated as multiple events with the same action. For example, if a condition is:
*When A or B enters California, send message to D,*
then the event can be treated as two separate events: (1) *When A enters California, send message to D* and (2) *When B enters California, send message to D.* Both mobile users must be tracked, as this condition is really two separate events. Each of these conditions depend upon a single user entering/leaving a region. Once one of these event is triggered, the overall condition is satisfied and it no longer necessary to track the other event or events, which should then be removed.

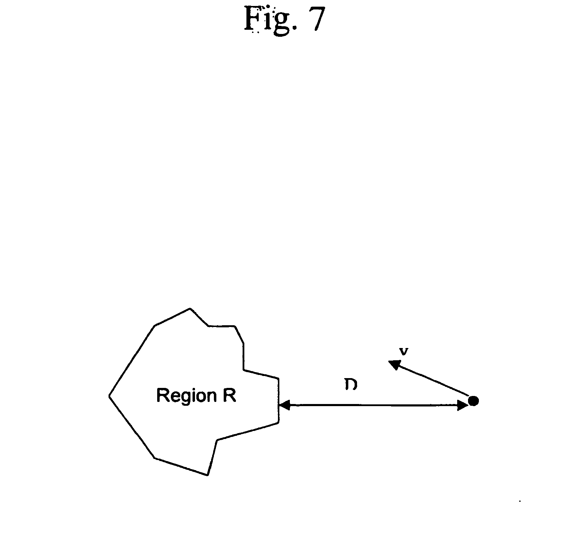

A mobile user moving toward a region R is shown in Fig. 7. The current distance of the mobile user from the region is D and velocity is v. Here D is the shortest distance between the mobile user and the region and it does not consider the direction of the movement. The event has a time tolerance t. A vector p is used to represent the user's past n positions. The heuristic function, which outputs a time interval for determining a predicted time, can then be described as: T = f(D, v, p, t). It is to be noted that D may also be taken as a heuristic involving the location and velocity of the user and the target region. Thus, D may be defined as: D = h(R, 1, v), where R is the target region, I is the location of the user, and v is the velocity of the user.

It is important to note that while the present invention has been described in the context of a fully functioning data processing system, those of ordinary skill in the art will appreciate that the processes of the present invention are capable of being distributed in the form of a computer readable medium of instructions and a variety of forms and that the present invention applies equally regardless of the particular type of signal bearing media actually used to carry out the distribution. Examples of computer readable media include recordable-type media such as floppy disc, a hard disk drive, RAM, and CD-ROM's, as well as transmission-type media, such as digital and analog communications links.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

## Claims

1. A method for providing location-based event service comprising the steps of:
a) obtaining information indicating a current location of at least one mobile user, the at least one mobile user comprising a selected mobile user (step 402); **characterised by**
b) determining if at least one condition relating to the locations of a plurality of mobile users, including the selected mobile user, is satisfied based on the indicated current location of the selected mobile user (step 404, step 406);
c) performing at least one event, if the at least one condition is satisfied (step 408); and
d) determining a time interval to wait before repeating steps a) - c) (step 412), wherein the step of determining a time interval to wait comprises the steps of:
selecting as the selected mobile user, a mobile user from the plurality of mobile users that is least likely to cause the at least one condition to be satisfied (step 604); and
determining the time interval to wait based on the selected mobile user (step 606).

2. The method of claim 1, wherein the step of determining a time interval to wait based on the selected mobile user comprises the steps of:
estimating a time at which the selected mobile user is likely to satisfy a condition based on at least one of: a distance from a current location of the selected mobile user to a region relevant to the condition, a velocity of the selected mobile user; and
determining the time interval to wait based on the estimated time at which the selected mobile user is likely to satisfy a condition and a time tolerance.

3. The method of claim 2, wherein the obtaining step comprises the steps of:
searching a cache operable to store information indicating locations of mobile users for information indicating a location of the at least one mobile user;
using the information indicating the location of the at least one mobile user as the information indicating the current location of the at least one mobile user, if the information indicating the location of the at least one mobile user is found in the cache; and
querying at least one mobile positioning server to obtain information indicating the current location of the at least one mobile user, if the information indicating the location of the at least one mobile user is not found in the cache.

4. The method of claim 3, wherein the at least one event comprises transmitting a message.

5. The method of claim 4, wherein the message is transmitted to a mobile user.

6. The method of claim 4, wherein the message is transmitted to a non-mobile user.

7. The method of claim 3, wherein the at least one condition additionally relates to a time.

8. A system for providing location-based event service comprising:
a processor (202) operable to execute computer program instructions; and
a memory (208) operable to store computer program instructions executable by the processor, the system being adapted to perform the step of:
a) obtaining information indicating a current location of at least one mobile user, the at least one mobile user comprising a selected mobile user (step 402); **characterised by** being adapted to perform the steps of
b) determining if at least one condition relating to the locations of a plurality of mobile users, including the selected mobile user, is satisfied based on the indicated current location of the selected mobile user (step 404, step 406);
c) performing at least one event, if the at least one condition is satisfied (step 408); and
d) determining a time interval to wait before repeating steps a) - c) (step 412), wherein the system is further adapted to determine a time interval to wait by performing the steps of:
selecting as the selected mobile user, a mobile user from the plurality of mobile users that is least likely to cause the at least one condition to be satisfied (step 604); and
determining the time interval to wait based on the selected mobile user (step 606).

9. The system of claim 8, further adapted to determine a time interval to wait based on the selected mobile user by performing the steps of:
estimating a time at which the selected mobile user is likely to satisfy a condition based on at least one of: a distance from a current location of the selected mobile user to a region relevant to the condition, a velocity of the selected mobile user; and
determining the.time interval to wait based on the estimated time at which the selected mobile user is likely to satisfy a condition and a time tolerance.

10. The system of claim 9, further adapted to obtain information indicating a current location of at least one mobile user, the at least one mobile user comprising a selected mobile user (step 402), by performing the steps of:
searching a cache operable to store information indicating locations of mobile users for information indicating a location of the at least one mobile user,
using the information indicating the location of the at least one mobile user as the information indicating the current location of the at least one mobile user, if the information indicating the location of the at least one mobile user is found in the cache; and
querying at least one mobile positioning server to obtain the information indicating the current location of the at least one mobile user, if the information indicating the location of the at least one mobile user is not found in the cache.

11. The system of claim 10, adapted so that the at least one event comprises transmitting a message.

12. The system of claim 11, adapted so that the message is transmitted to a mobile user.

13. The system of claim 11, adapted so that the message is transmitted to a non-mobile user.

14. The system of claim 10, wherein the at least one condition additionally relates to a time.

15. A computer program product for providing location-based event service comprising:
a computer readable medium;
computer program instructions, recorded on the computer readable medium, executable by a processor, for performing the steps of:
a) obtaining information indicating a current location of at least one mobile user, the at least one mobile user comprising a selected mobile user (step 402); **characterised by**
b) determining if at least one condition relating to the locations of a plurality of mobile users, including the selected mobile user, is satisfied based on the indicated current location of the selected mobile user (step 404, step 406);
c) performing at least one event, if the at least one condition is satisfied (step 408); and
d) determining a time interval to wait before repeating steps a) - c) (step 412), wherein the step of determining a time interval to wait comprises the steps of:
selecting as the selected mobile user, a mobile user from the plurality of mobile users that is least likely to cause the at least one condition to be satisfied (step 604); and
determining the time interval to wait based on the selected mobile user (step 606).

16. The computer program product of claim 15, wherein the step of determining a time interval to wait based on the selected mobile user comprises the steps of:
estimating a time at which the selected mobile user is likely to satisfy a condition based on at least one of: a distance from a current location of the selected mobile user to a region relevant to the condition, a velocity of the selected mobile user; and
determining the time interval to wait based on the estimated time at which the selected mobile user is likely to satisfy a condition and a time tolerance.

17. The computer program product of claim 16, wherein the obtaining step comprises the steps of:
searching a cache operable to store information indicating locations of mobile users for information indicating a location of the at least one mobile user;
using the information indicating the location of the at least one mobile user as the information indicating the current location of the at least one mobile user, if the information indicating the location of the at least one mobile user is found in the cache; and
querying at least one mobile positioning server to obtain the information indicating the current location of the at least one mobile user, if the information indicating the location of the at least one mobile user is not found in the cache.

18. The computer program product of claim 17, wherein the at least one event comprises transmitting a message.

19. The computer program product of claim 18, wherein the message is transmitted to a mobile user.

20. The computer program product of claim 18, wherein the message is transmitted to a non-mobile user.

21. The computer program product of claim 17, wherein the at least one condition additionally relates to a time.

## Patentansprüche

1. Verfahren zum Bereitstellen eines standortabhängigen Ereignisdienstes, umfassend die folgenden Schritte:
a) Gewinnen von Informationen, die einen aktuellen Standort mindestens eines mobilen Anwenders angeben, wobei der mindestens eine mobile Anwender einen ausgewählten mobilen Anwender umfasst (Schritt 402); **gekennzeichnet durch**
b) Bestimmen, ob mindestens eine Bedingung in Bezug auf die Standorte einer Vielzahl von mobilen Anwendern, einschließlich des ausgewählten mobilen Anwenders, erfüllt ist, anhand des angegebenen aktuellen Standorts des ausgewählten mobilen Anwenders (Schritt 404, Schritt 406);
c) Vollbringen mindestens eines Ereignisses, wenn die mindestens eine Bedingung erfüllt ist (Schritt 408); und
d) Bestimmen eines Zeitintervalls, das abzuwarten ist, bevor die Schritte a) bis c) wiederholt werden (Schritt 412), wobei der Schritt des Bestimmens des Zeitintervalls, das abzuwarten ist, die Schritte umfasst:
Auswählen, als ausgewählten mobilen Anwender, des mobilen Anwenders aus einer Vielzahl von mobilen Anwendern, der am wenigsten wahrscheinlich herbeiführt, dass die mindestens eine Bedingung erfüllt ist (Schritt 604); und
Bestimmen des Zeitintervalls, das abzuwarten ist, anhand des ausgewählten mobilen Anwenders (Schritt 606).

2. Verfahren nach Anspruch 1, wobei der Schritt des Bestimmens des Zeitintervalls, das abzuwarten ist, anhand des ausgewählten mobilen Anwenders die folgenden Schritte umfasst:
Schätzen der Zeit, zu der der ausgewählte mobile Anwender wahrscheinlich eine Bedingung erfüllt, anhand der Entfernung des aktuellen Standorts des ausgewählten mobilen Anwenders von einer Region, die für die Bedingung relevant ist, oder/und der Geschwindigkeit des ausgewählten mobilen Anwenders; und
Bestimmen des Zeitintervalls, das abzuwarten ist, anhand der geschätzten Zeit, zu der der ausgewählte mobile Anwender wahrscheinlich eine Bedingung erfüllt, und einer Zeittoleranz.

3. Verfahren nach Anspruch 2, wobei der Gewinnungsschritt die folgenden Schritte umfasst:
Durchsuchen eines Caches, der so betriebsfähig ist, dass er Informationen speichert, die Standorte von mobilen Anwendern angeben, nach Informationen, die einen Standort des mindestens einen mobilen Anwenders angeben;
Verwenden der Informationen, die den Standort des mindestens einen mobilen Anwenders angeben, als die Informationen, die den aktuellen Standort des mindestens einen mobilen Anwenders angeben, wenn die Informationen, die den Standort des mindestens einen mobilen Anwenders angeben, in dem Cache gefunden werden; und
Abfragen mindestens eines Mobilfunk-Lokalisierungsservers, um Informationen zu gewinnen, die den aktuellen Standort des mindestens einen mobilen Anwenders angeben, wenn die Informationen, die den Standort des mindestens einen mobilen Anwenders angeben, nicht in dem Cache gefunden werden.

4. Verfahren nach Anspruch 3, wobei das mindestens eine Ereignis das Senden einer Nachricht umfasst.

5. Verfahren nach Anspruch 4, wobei die Nachricht an einen mobilen Anwender gesendet wird.

6. Verfahren nach Anspruch 4, wobei die Nachricht an einen nicht-mobilen Anwender gesendet wird.

7. Verfahren nach Anspruch 3, wobei sich die mindestens eine Bedingung außerdem auf eine Zeit bezieht.

8. System zum Bereitstellen eines standortabhängigen Ereignisdienstes, umfassend:
einen Prozessor (202), der so betriebsfähig ist, dass er Computerprogrammanweisungen abarbeitet; und
einen Speicher (208), der so betriebsfähig ist, dass er durch den Prozessor ausführbare Computerprogrammanweisungen speichert, wobei das System eingerichtet ist, folgende Schritte auszuführen:
a) Gewinnen von Informationen, die einen aktuellen Standort mindestens eines mobilen Anwenders angeben, wobei der mindestens eine mobile Anwender einen ausgewählten mobilen Anwender umfasst (Schritt 402); **dadurch gekennzeichnet, dass** es eingerichtet ist, die folgenden Schritte auszuführen:
b) Bestimmen, ob mindestens eine Bedingung in Bezug auf die Standorte einer Vielzahl von mobilen Anwendern, einschließlich des ausgewählten mobilen Anwenders, erfüllt ist, anhand des angegebenen aktuellen Standorts des ausgewählten mobilen Anwenders (Schritt 404, Schritt 406);
c) Vollbringen mindestens eines Ereignisses, wenn die mindestens eine Bedingung erfüllt ist (Schritt 408); und
d) Bestimmen eines Zeitintervalls, das abzuwarten ist, bevor die Schritte a) bis c) wiederholt werden (Schritt 412), wobei das System ferner eingerichtet ist, ein Zeitintervall, das abzuwarten ist, zu bestimmen, indem es die folgenden Schritte ausführt:
Auswählen, als ausgewählten mobilen Anwender, des mobilen Anwenders aus einer Vielzahl von mobilen Anwendern, der am wenigsten wahrscheinlich herbeiführt, dass die mindestens eine Bedingung erfüllt ist (Schritt 604); und
Bestimmen des Zeitintervalls, das abzuwarten ist, anhand des ausgewählten mobilen Anwenders (Schritt 606).

9. System nach Anspruch 8, ferner eingerichtet, ein Zeitintervall, das abzuwarten ist, anhand des ausgewählten mobilen Anwenders zu bestimmen, indem es die folgenden Schritte ausführt:
Schätzen der Zeit, zu der der ausgewählte mobile Anwender wahrscheinlich eine Bedingung erfüllt, anhand der Entfernung des aktuellen Standorts des ausgewählten mobilen Anwenders von einer Region, die für die Bedingung relevant ist, oder/und der Geschwindigkeit des ausgewählten mobilen Anwenders; und
Bestimmen des Zeitintervalls, das abzuwarten ist, anhand der geschätzten Zeit, zu der der ausgewählte mobile Anwender wahrscheinlich eine Bedingung erfüllt, und einer Zeittoleranz.

10. System nach Anspruch 9, ferner eingerichtet, um Informationen zu gewinnen, die einen aktuellen Standort mindestens eines mobilen Anwenders angeben, wobei der mindestens eine mobile Anwender einen ausgewählten mobilen Anwender (Schritt 402) umfasst, indem es die folgenden Schritte ausführt:
Durchsuchen eines Caches, der so betriebsfähig ist, dass er Informationen speichert, die Standorte von mobilen Anwendern angeben, nach Informationen, die den Standort des mindestens einen mobilen Anwenders angeben;
Verwenden der Informationen, die den Standort des mindestens einen mobilen Anwenders angeben, als die Informationen, die den aktuellen Standort des mindestens einen mobilen Anwenders angeben, wenn die Informationen, die den Standort des mindestens einen mobilen Anwenders angeben, in dem Cache gefunden werden; und
Abfragen mindestens eines Mobilfunk-Lokalisierungsservers, um die Informationen zu gewinnen, die den aktuellen Standort des mindestens einen mobilen Anwenders angeben, wenn die Informationen, die den Standort des mindestens einen mobilen Anwenders angeben, nicht in dem Cache gefunden werden.

11. System nach Anspruch 10, eingerichtet, so dass das mindestens eine Ereignis ein Senden einer Nachricht umfasst.

12. System nach Anspruch 11, eingerichtet, so dass die Nachricht an einen mobilen Anwender gesendet wird.

13. System nach Anspruch 11, eingerichtet, so dass die Nachricht an einen nicht-mobilen Anwender gesendet wird.

14. System nach Anspruch 10, wobei sich die mindestens eine Bedingung außerdem auf eine Zeit bezieht.

15. Computerprogrammprodukt zum Bereitstellen eines standortabhängigen Ereignisdienstes, umfassend
ein computerlesbares Medium;
Computerprogrammanweisungen, gespeichert auf dem computerlesbaren Medium, die durch einen Prozessor ausführbar sind, um die folgenden Schritte auszuführen:
a) Gewinnen von Informationen, die einen aktuellen Standort mindestens eines mobilen Anwenders angeben, wobei der mindestens eine mobile Anwender einen ausgewählten mobilen Anwender umfasst (Schritt 402); **gekennzeichnet durch**
b) Bestimmen, ob mindestens eine Bedingung in Bezug auf die Standorte einer Vielzahl von mobilen Anwendern, einschließlich des ausgewählten mobilen Anwenders, erfüllt ist, anhand des angegebenen aktuellen Standorts des ausgewählten mobilen Anwenders (Schritt 404, Schritt 406);
c) Vollbringen mindestens eines Ereignisses, wenn die mindestens eine Bedingung erfüllt ist (Schritt 408); und
d) Bestimmen eines Zeitintervalls, das abzuwarten ist, bevor die Schritte a) bis c) wiederholt werden (Schritt 412), wobei der Schritt des Bestimmens eines Zeitintervalls, das abzuwarten ist, die Schritte umfasst:
Auswählen, als ausgewählten mobilen Anwender, eines mobilen Anwenders aus einer Vielzahl von mobilen Anwendern, der am wenigsten wahrscheinlich herbeiführt, dass die mindestens eine Bedingung erfüllt ist (Schritt 604); und
Bestimmen des Zeitintervalls, das abzuwarten ist, anhand des ausgewählten mobilen Anwenders (Schritt 606).

16. Computerprogrammprodukt nach Anspruch 15, wobei der Schritt des Bestimmens eines Zeitintervalls, das abzuwarten ist, anhand des ausgewählten mobilen Anwenders die folgenden Schritte umfasst:
Schätzen einer Zeit, zu der der ausgewählte mobile Anwender wahrscheinlich eine Bedingung erfüllt, anhand der Entfernung des aktuellen Standorts des ausgewählten mobilen Anwenders von einer Region, die für die Bedingung relevant ist, oder/und der Geschwindigkeit des ausgewählten mobilen Anwenders; und
Bestimmen des Zeitintervalls, das abzuwarten ist, anhand der geschätzten Zeit, zu der der ausgewählte mobile Anwender wahrscheinlich eine Bedingung erfüllt, und einer Zeittoleranz.

17. Computerprogrammprodukt nach Anspruch 16, wobei der Gewinnungsschritt die Schritte umfasst:
Durchsuchen eines Caches, der so betriebsfähig ist, dass er Informationen speichert, die Standorte von mobilen Anwendern angeben, nach Informationen, die einen Standort mindestens eines mobilen Anwenders angeben;
Verwenden der Informationen, die den Standort des mindestens einen mobilen Anwenders angeben, als die Informationen, die den aktuellen Standort des mindestens einen mobilen Anwenders angeben, wenn die Informationen, die den Standort des mindestens einen mobilen Anwenders angeben, in dem Cache gefunden werden; und
Abfragen mindestens eines Mobilfunk-Lokalisierungsservers, um Informationen zu gewinnen, die den aktuellen Standort des mindestens einen mobilen Anwenders angeben, wenn die Informationen, die den Standort des mindestens einen mobilen Anwenders angeben, nicht in dem Cache gefunden werden.

18. Computerprogrammprodukt nach Anspruch 17, wobei das mindestens eine Ereignis das Senden einer Nachricht umfasst.

19. Computerprogrammprodukt nach Anspruch 18, wobei die Nachricht an einen mobilen Anwender gesendet wird.

20. Computerprogrammprodukt nach Anspruch 18, wobei die Nachricht an einen nicht-mobilen Anwender gesendet wird.

21. Computerprogrammprodukt nach Anspruch 17, wobei sich die mindestens eine Bedingung außerdem auf eine Zeit bezieht.

## Revendications

1. Procédé destiné à fournir un service d'événements basés sur la localisation comprenant les étapes consistant à :
a) obtenir des informations indiquant une localisation actuelle d'au moins un utilisateur mobile, l'au moins un utilisateur mobile comprenant un utilisateur mobile sélectionné (étape 402) ;
**caractérisé par** le fait de :
b) déterminer si au moins une condition relative aux localisations d'une pluralité d'utilisateurs mobiles, incluant l'utilisateur mobile sélectionné, est satisfaite en fonction de la localisation actuelle indiquée de l'utilisateur mobile sélectionné (étape 404, étape 406) ;
c) réaliser au moins un événement, si l'au moins une condition est satisfaite (étape 408) ; et
d) déterminer un intervalle de temps d'attente avant de répéter les étapes a) à c) (étape 412),
dans lequel l'étape de détermination d'un intervalle de temps d'attente comprend les étapes consistant à :
sélectionner comme utilisateur mobile sélectionné un utilisateur mobile à partir de la pluralité d'utilisateurs mobiles qui soit moins susceptible d'amener l'au moins une condition à être satisfaite (étape 604) ; et
déterminer l'intervalle de temps d'attente en fonction de l'utilisateur mobile sélectionné (étape 606).

2. Procédé selon la revendication 1, dans lequel l'étape de détermination d'un intervalle de temps d'attente en fonction de l'utilisateur mobile sélectionné comprend les étapes consistant à :
estimer un moment où l'utilisateur mobile sélectionné est susceptible de satisfaire à une condition en fonction d'au moins un élément parmi : une distance à partir d'une localisation actuelle de l'utilisateur mobile sélectionné jusqu'à une région conforme à la condition, une vitesse de l'utilisateur mobile sélectionné ; et
déterminer l'intervalle de temps d'attente en fonction du temps estimé où l'utilisateur mobile sélectionné est susceptible de satisfaire à une condition et une tolérance de temps.

3. Procédé selon la revendication 2, dans lequel l'étape d'obtention comprend les étapes consistant à :
rechercher, dans une mémoire cache qui peut être exploitée pour stocker des informations indiquant des localisations d'utilisateurs mobiles, des informations indiquant une localisation de l'au moins un utilisateur mobile ;
utiliser les informations indiquant la localisation de l'au moins un utilisateur mobile comme informations indiquant la localisation actuelle de l'au moins un utilisateur mobile, si les informations indiquant la localisation de l'au moins un utilisateur mobile ont été trouvées dans la mémoire cache ; et
interroger au moins un serveur de positionnements mobiles pour obtenir des informations indiquant la localisation actuelle de l'au moins un utilisateur mobile, si les informations indiquant la localisation de l'au moins un utilisateur mobile n'ont pas été trouvées dans la mémoire cache.

4. Procédé selon la revendication 3, dans lequel l'au moins un événement comprend la transmission d'un message.

5. Procédé selon la revendication 4, dans lequel le message est transmis à un utilisateur mobile.

6. Procédé selon la revendication 4, dans lequel le message est transmis à un utilisateur non mobile.

7. Procédé selon la revendication 3, dans lequel l'au moins une condition concerne de plus un temps.

8. Système destiné à fournir un service d'événements basés sur la localisation comprenant :
un processeur (202) qui peut être exploité pour exécuter des instructions d'un programme informatique ; et
une mémoire (208) qui peut être exploitée pour stocker des instructions de programme informatique pouvant être exécutées par le processeur, le système étant adapté pour réaliser les étapes consistant à :
a) obtenir des informations indiquant une localisation actuelle d'au moins un utilisateur mobile, l'au moins un utilisateur mobile comprenant un utilisateur mobile sélectionné (étape 402) ;
**caractérisé par** le fait d'être adapté pour réaliser les étapes consistant à :
b) déterminer si au moins une condition relative aux localisations d'une pluralité d'utilisateurs mobiles, incluant l'utilisateur mobile sélectionné, est satisfaite en fonction de la localisation actuelle indiquée de l'utilisateur mobile sélectionné (étape 404, étape 406) ;
c) réaliser au moins un événement, si l'au moins une condition est satisfaite (étape 408) ; et
d) déterminer un intervalle de temps d'attente avant de répéter les étapes a) à c) (étape 412),
dans lequel le système est en outre adapté pour déterminer un intervalle de temps d'attente en réalisant les étapes consistant à :
sélectionner comme utilisateur mobile sélectionné un utilisateur mobile à partir de la pluralité d'utilisateurs mobiles qui soit moins susceptible d'amener l'au moins une condition à être satisfaite (étape 604) ; et
déterminer l'intervalle de temps d'attente en fonction de l'utilisateur mobile sélectionné (étape 606).

9. Système selon la revendication 8, adapté en outre pour déterminer un intervalle de temps d'attente en fonction de l'utilisateur mobile sélectionné en réalisant les étapes consistant à :
estimer un temps où l'utilisateur mobile sélectionné est susceptible de satisfaire à une condition en fonction d'au moins un élément parmi : une distance à partir d'une localisation actuelle de l'utilisateur mobile sélectionné jusqu'à une région conforme à la condition, une vitesse de l'utilisateur mobile sélectionné ; et
déterminer l'intervalle de temps d'attente en fonction du temps estimé où l'utilisateur mobile sélectionné est susceptible de satisfaire à une condition et une tolérance de temps.

10. Système selon la revendication 9, adapté en outre pour obtenir des informations indiquant une localisation actuelle d'au moins un utilisateur mobile, l'au moins un utilisateur mobile comprenant un utilisateur mobile sélectionné (étape 402), en réalisant les étapes consistant à :
rechercher, dans une mémoire cache qui peut être exploitée pour stocker des informations indiquant des localisations d'utilisateurs mobiles, des informations indiquant une localisation de l'au moins un utilisateur mobile ;
utiliser les informations indiquant la localisation de l'au moins un utilisateur mobile comme informations indiquant la localisation actuelle de l'au moins un utilisateur mobile, si les informations indiquant la localisation de l'au moins un utilisateur mobile ont été trouvées dans la mémoire cache ; et
interroger au moins un serveur de positionnements mobiles pour obtenir des informations indiquant la localisation actuelle de l'au moins un utilisateur mobile, si les informations indiquant la localisation de l'au moins un utilisateur mobile n'ont pas été trouvées dans la mémoire cache.

11. Système selon la revendication 10, adapté de sorte que l'au moins un événement comprend la transmission d'un message.

12. Système selon la revendication 11, adapté de sorte que le message est transmis à un utilisateur mobile.

13. Système selon la revendication 11, adapté de sorte que le message est transmis à un utilisateur non mobile.

14. Système selon la revendication 10, dans lequel l'au moins une condition concerne de plus un temps.

15. Produit de programme informatique destiné à fournir un service d'événements basés sur la localisation comprenant :
un support lisible sur ordinateur ;
des instructions de programme informatique, enregistrées sur le support lisible sur ordinateur, pouvant être exécutées par un processeur, pour réaliser les étapes consistant à :
a) obtenir des informations indiquant une localisation actuelle d'au moins un utilisateur mobile, l'au moins un utilisateur mobile comprenant un utilisateur mobile sélectionné (étape 402) ;
**caractérisé par** le fait de :
b) déterminer si au moins une condition relative aux localisations d'une pluralité d'utilisateurs mobiles, incluant l'utilisateur mobile sélectionné, est satisfaite en fonction de la localisation actuelle indiquée de l'utilisateur mobile sélectionné (étape 404, étape 406) ;
c) réaliser au moins un événement, si l'au moins une condition est satisfaite (étape 408) ; et
d) déterminer un intervalle de temps d'attente avant de répéter les étapes a) à c) (étape 412),
dans lequel l'étape de détermination d'un intervalle de temps d'attente comprend les étapes consistant à :
sélectionner comme utilisateur mobile sélectionné un utilisateur mobile à partir de la pluralité d'utilisateurs mobiles qui soit moins susceptible d'amener l'au moins une condition à être satisfaite (étape 604) ; et
déterminer l'intervalle de temps d'attente en fonction de l'utilisateur mobile sélectionné (étape 606).

16. Produit de programme informatique selon la revendication 15, dans lequel l'étape de détermination d'un intervalle de temps d'attente en fonction de l'utilisateur mobile sélectionné comprend les étapes consistant à :
estimer un temps où l'utilisateur mobile sélectionné est susceptible de satisfaire à une condition en fonction d'au moins un élément parmi : une distance à partir d'une localisation actuelle de l'utilisateur mobile sélectionné jusqu'à une région conforme à la condition, une vitesse de l'utilisateur mobile sélectionné ; et
déterminer l'intervalle de temps d'attente en fonction du temps estimé où l'utilisateur mobile sélectionné est susceptible de satisfaire à une condition et une tolérance de temps.

17. Produit de programme informatique selon la revendication 16, dans lequel l'étape d'obtention comprend les étapes consistant à :
rechercher, dans une mémoire cache qui peut être exploitée pour stocker des informations indiquant des localisations d'utilisateurs mobiles, des informations indiquant une localisation de l'au moins un utilisateur mobile ;
utiliser les informations indiquant la localisation de l'au moins un utilisateur mobile comme informations indiquant la localisation actuelle de l'au moins un utilisateur mobile, si les informations indiquant la localisation de l'au moins un utilisateur mobile ont été trouvées dans la mémoire cache ; et
interroger au moins un serveur de positionnements mobiles pour obtenir les informations indiquant la localisation actuelle de l'au moins un utilisateur mobile, si les informations indiquant la localisation de l'au moins un utilisateur mobile n'ont pas été trouvées dans la mémoire cache.

18. Produit de programme informatique selon la revendication 17, dans lequel l'au moins un événement comprend la transmission d'un message.

19. Produit de programme informatique selon la revendication 18, dans lequel le message est transmis à un utilisateur mobile.

20. Produit de programme informatique selon la revendication 18, dans lequel le message est transmis à un utilisateur non mobile.

21. Produit de programme informatique selon la revendication 17, dans lequel l'au moins une condition concerne de plus un temps.
